# EUROPÄISCHE PATENTSCHRIFT

(11) **EP 0 993 262 B1**
(45) Veröffentlichungstag und Bekanntmachung des Hinweises auf die Patenterteilung: **03.04.2002**
(21) Anmeldenummer: 97930479.7
(22) Anmeldetag: 02.07.1997
(51) Int. Cl.: A46D 3/00, B29C 45/16

(54) **SPRITZGIESSVORRICHTUNG**
INJECTION MOULDING DEVICE
DISPOSITIF DE MOULAGE PAR INJECTION

(43) Veröffentlichungstag der Anmeldung: 19.04.2000
(73) Patentinhaber: M + C SCHIFFER GmbH, 53577 Neustadt (DE)
(72) Erfinder: LANVERS, Andreas, D-53604 Bad Honnef (DE)
(74) Vertreter: Grünecker, Kinkeldey, Stockmair & Schwanhäusser Anwaltssozietät
(86) Internationale Anmeldenummer: EP9703456
(87) Internationale Veröffentlichungsnummer: WO9901055

(56) Entgegenhaltungen:
- EP-A- 0 563 419
- EP-A- 0 681 798
- DE-A- 3 512 192
- DE-A- 4 423 145
- DE-A- 19 522 122
- PATENT ABSTRACTS OF JAPAN vol. 009, no. 046 (M-360), 27.Februar 1985 & JP 59 184633 A (YAMASHIRO SEIKI SEISAKUSHO:KK), 20.Oktober 1984,

## Beschreibung

Die Erfindung betrifft eine Mehrkomponenten-Spritzgießvorrichtung, insbesondere zur Herstellung von Zahnbürsten, mit mindestens zwei abfolgenden Stationen, von denen eine eine Spritzgießstation ist, und einer Transportvorrichtung zwischen den Stationen, die einen die Stationen verbindenden Zugmitteltrieb aufweist, wobei der Zugmittelbetrieb durch zumindest ein Spritzgießwerkzeug mit der einen Spritzgießstation geführt ist.

Spritzgießvorrichtungen der vorgenannten Art sind insbesondere für die Herstellung von Zahnbürsten geeignet, bei denen ein Bürstenkörper aus mehreren Komponenten besteht, die nacheinander gespritzt werden. Bei den verschiedenen Spritzvorgängen für die einzelnen Komponenten kann auch gleiches Spritzgießmaterial eingesetzt werden.

Eine Spritzgießvorrichtung ist aus der DE 42 43 293 A1 bekannt. Die Transportvorrichtung ist dort als drehbares und auf und ab bewegbares Karussel in Form einer Indexplatte ausgebildet, über die zu umspritzende Elemente, wie z.B. Borsten oder halbfertige Spritzlinge, taktweise aufeinanderfolgenden Spritzgießstationen zugeführt werden. Der Transport erfolgt dabei innerhalb eines Spritzgießwerkzeuges, das ebenfalls taktweise geöffnet und geschlossen wird.

Wenn die Spritzlinge aus dem Werkzeug über eine Greifvorrichtung entnommen werden sollen, muß das Spritzgießwerkzeug, dessen Öffnungsrichtung senkrecht zu dem Transportkarussell verläuft, sehr weit geöffnet werden, wodurch eine Verkürzung der Zykluszeit je Arbeitstakt eingeschränkt ist.

Eine ähnliche Vorrichtung ist aus der EP 0 678 368 A1 bekannt. Weitere Mehrkomponenten-Spritzgießvorrichtungen zur Herstellung von Zahnbürsten sind aus der DE 44 23 145 A1, EP 0 563 419 A1 und EP 0 681 798 A1 bekannt.

Aus der JP-A-59-184633 ist eine Anlage aus mehreren Spritzgießmaschinen, denen eine gemeinsame Transportvorrichtung zugeordnet ist, bekannt. Eine Spritzgußform zur Herstellung von Kunststoff-Bürstenkörpem ist aus der DE 195 22 122 A1 bekannt.

Eine Mehrkomponenten-Spritzgießvorrichtung der eingangs genannten Art ist aus der DE 35 12 192 A1 bekannt. Hierbei werden Borstenbündel an einer Endloskette durch eine Spritzgießmaschine transportiert und taktweise umspritzt.

Der Erfindung liegt die Aufgabe zugrunde, bei einer Spritzgießvorrichtung der eingangs genannten Art die Herstellungsgeschwindigkeit und Fertigungsflexibilität zu erhöhen.

Diese Aufgabe wird bei einer Spritzgießvorrichtung der eingangs genannten Art erfindungsgemäß dadurch gelöst, daß der Zugmitteltrieb diese Spritzgießstation mit Stationen außerhalb des Spritzgießwerkzeuges verbindet und durch diesen oder einen weiteren Zugmitteltrieb die erste Spritzgießstation mit zumindest einer weiteren Spritzgießstation für das Anspritzen einer weiteren Komponente verbunden ist

Zweckmäßige Weiterbildungen der Erfindung sind Gegenstand der abhängigen Ansprüche.

Durch die Verwendung eines Zugmitteltriebes als Transportvorrichtung zur Verbindung mit der Spritzgießstation braucht das Spritzgießwerkzeug nur noch spaltweit geöffnet zu werden, um die Spritzlinge aus diesem herauszufördern. Damit kann das Spritzgießwerkzeug schneller als bisher geöffnet und wieder geschlossen werden.

Vorzugsweise sind zumindest zwei Spritzgießstationen vorgesehen.

Im Gegensatz zur Karussellbauweise ist es ohne weiteres möglich, teilfertige Spritzlinge erst nach mehreren Arbeitstakten einer weiteren Spritzgießstation zuzuführen, beispielsweise durch eine entsprechende Verlängerung des Zugmitteltriebes, ohne daß dies einen Umbau der gesamten Spritzgießvorrichtung zur Folge hat. Auf zusätzliche Abkühlstationen kann verzichtet werden, ohne daß dies eine Verringerung der Herstellungsgeschwindigkeit bedeutet. Mit der vorliegenden Erfindung ist es daher möglich, die Herstellungsgeschwindigkeit zu erhöhen bzw. die Zykluszeiten der einzelnen Arbeitstakte an die erforderliche Abkühlzeit der Spritzlinge beim Spritzgießwerkzeug selbst anzunähern.

Zudem ist es problemlos möglich, zwischen den einzelnen Spritzgießstationen je nach Bedarf Zwischenbearbeitungsschritte in die Fertigungsfolge einzugliedern. Dadurch wird die Fertigungsflexibilität verbessert. Der zusätzliche konstruktive Aufwand bleibt dabei gering. Durch den lediglich einen geringen Raumbedarf erfordernden Zugmitteltrieb kann zudem die Anzahl von Formhohlräumen vergrößert werden, so daß sich ein höheres Verhältnis von Kavitäten bezogen auf die Masse des Spritzgießwerkzeuges ergibt.

Gemäß einer bevorzugten Weiterbildung der Erfindung sind an einer ersten Spritzgießstation zum Spritzen eines oder mehrerer Grundkörper und an einer nachfolgenden, zweiten Spritzgießstation zum Anspritzen weiteren Spritzgußmaterials an diese Grundkörper jeweils ein oder mehrere Formhohlräume vorgesehen, wobei die beiden Spritzgießstationen unmittelbar nebeneinander angeordnet sind. Vorzugsweise sind beide Formhohlraumgruppen in einem gemeinsamen Spritzgießwerkzeug angeordnet, so daß lediglich eine Öffnungs- und Schließvorrichtung für beide Stationen erforderlich ist

Vorzugsweise wird der Zugmitteltrieb zwischen der ersten und zweiten Spritzgießstation außerhalb des gemeinsamen Spritzgießwerkzeuges umgelenkt, so daß die Grundkörperspritzlinge nach dem Verlassen der ersten Spritzgießstation aus dem Spritzgießwerkzeug herausgeführt und nach einer gewissen Zeit entsprechend der Länge des Zugmitteltriebes und der Arbeitstakte der zweiten Spritzgießstation zugeführt werden. Außerhalb des Spritzgießwerkzeuges können so zwischen diesen beiden Stationen weitere Bearbeitungsschritte an den halbfertigen Spritzlingen vorgenommen werden.

Vorzugsweise verlaufen Abschnitte des Zugmitteltriebes innerhalb der ersten und zweiten Spritzgießstation im wesentlichen parallel zueinander. Dies ermöglicht eine enge Anordnung der Formhohlräume nebeneinander und somit eine kompakte Bauweise des Spritzgießwerkzeuges, sowie eine hohe Anzahl von Kavitäten bezogen auf die bewegte Werkzeugmasse.

Durch den Zugmitteltrieb können in vorteilhafter Weise zugleich außerhalb des Spritzgießwerkzeugs (Spritzgießvorrichtung) liegende Arbeitstationen, z.B. eine Aufgabestation stromauf des Spritzgießwerkzeugs und eine Abgabestation stromab des Spritzgießwerkzeugs, mit einer Mehrzahl von Spritzgießstationen verbunden werden.

So ist gemäß einer Weiterbildung der Erfindung der letzten Spritzgießstation eine Entnahmestation zur Entnahme der fertigen Spritzlinge von dem Zugmitteltrieb nachgeschaltet, die über den Zugmitteltrieb mit den Spritzgießstationen verbunden ist. Damit kann auch das Entfernen der fertigen Spritzlinge aus der Spritzgießvorrichtung außerhalb des Spritzgießwerkzeuges erfolgen, so daß dieser Vorgang die Herstellungsgeschwindigkeit nicht beeinträchtigt. Vielmehr ermöglicht diese separate Entnahmestation, das Spritzgießwerkzeug nur soweit wie nötig zu offen, um ein sicheres Herausziehen der fertigen Spritzlinge zu gewährleisten, da ein Einführen eines Greifers in das Spritzwerkzeug zum Entnehmen des Spritzgießlings unterbleiben kann.

Ferner ist vorzugsweise der ersten Spritzgießstation eine Eingabestation vorgeschaltet, die über den Zugmitteltrieb mit den Spritzgießstationen verbunden ist und in der zu umspritzende Elemente, beispielsweise die Borsten einer Zahnbürste, über die Halter an den Zugmitteltrieb ankoppelbar und den Spritzgießstationen zuführbar sind. Neben Borsten können hier auch andere beliebige Einlegeteile (Insert Molding), wie beispielsweise Metalleinsätze, Dekorfolien und dergleichen verwendet werden, die in dem Spritzgießwerkzeug mit Kunststoff umspritzt werden. Die Halter können auch Wechselköpfe für die Bürsten und beliebige Einsatz- oder Ergänzungsteile transportieren, die spritzgießtechnisch weiterverarbeitet werden.

Gemäß einer Weiterbildung der Erfindung ist für jede der beiden Spritzgießstationen ein separates Spritzgießwerkzeug vorgesehen. Diese beiden Werkzeuge ermöglichen eine weitergehende, effiziente Flexibilisierung der Fertigung hinsichtlich der Formgebung der Spritzlinge, beispielsweise durch den Austausch nur eines der beiden Spritzgießwerkzeuge.

Im folgenden wird nun die Erfindung anhand von Ausführungsbeispielen unter Bezugnahme auf die Zeichnung beschrieben. Diese zeigt in:
- Fig. 1: ein erstes Ausführungsbeispiel einer Mehrkomponenten-Spritzgießvorrichtung,
- Fig. 2: ein zweites Ausführungsbeispiel entsprechend Fig. 1, jedoch mit umlaufenden Zugmitteltrieb,
- Fig. 3: ein drittes Ausführungsbeispiel entsprechend Fig. 2, jedoch mit kurzem Zugmitteltrieb.
- Fig. 4: ein viertes Ausführungsbeispiel mit einer Übertragungsvorrichtung,
- Fig. 5: ein fünftes Ausführungsbeispiel mit zwei separaten Spritzgießwerkzeugen.

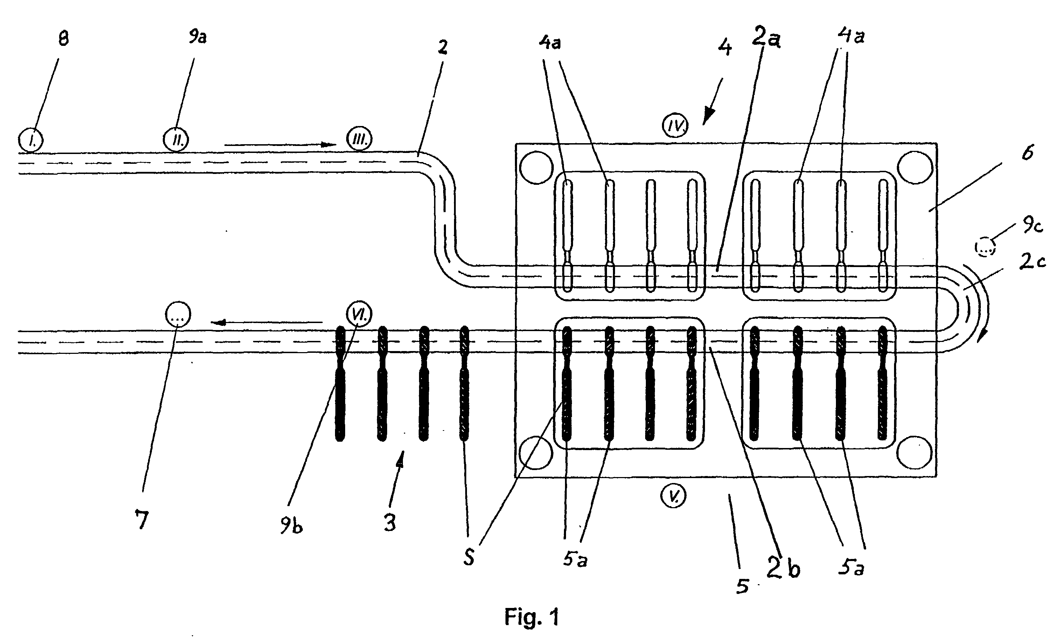

Fig.1 zeigt eine Mehrkomponenten-Spritzgießvorrichtung mit zwei aufeinanderfolgenden bzw. hintereinandergeschalteten Spritzgießstationen 4 und 5. Der ersten Spritzgießstation 4 ist eine Eingabestation 8 vorgeschaltet, während der zweiten Spritzgießstation 5 eine Entnahmestation 7 nachgeschaltet ist. Alle Stationen der Spritzgießvorrichtung 1 sind durch einen Zugmitteltrieb 2 verbunden. An dem Zugmitteltrieb 2 sind Halter 3 für die zu fertigenden Spritzlinge S vorgesehen.

An der ersten wie der zweiten Spritzgießstation 4,5 sind jeweils Formhohlräume 4a,5a in je zwei Gruppen angeordnet. Die ersten Formhohlräume 4a dienen dabei der Herstellung von Grundkörpem. Nach erfolgtem Transport in die zweite Spritzgießstation bzw. in die dort vorgesehenen Formhohlräume 5a wird an die Grundkörper weiteres Spritzgießmaterial angespritzt. Für jede der beiden Formhohlraumgruppen ist eine eigene Spritzgießmaterialzuführvorrichtung vorgesehen. Bei dem ersten gezeigten Ausführungsbeispiel sind die Formhohlräume 4a,5a in einen gemeinsamen Spritzwerkzeug 6 bzw. entsprechenden Formplatten ausgebildet. Die Anordnung der Formplatten erfolgt dabei so, daß bei einem Schließen des Spritzwerkzeuges gleichzeitig beide Formhohlräume 4a,5a durch eine einzige Schließvorrichtung geschlossen werden. Die beiden Formhohlräume 4a,5a sind eng benachbart und im wesentlichen parallel zueinander angeordnet, so daß sich ein kompaktes Spritzgießwerkzeug ergibt und die Aufbringung der erforderlichen Schließkräfte problemlos möglich ist. Die in der ersten Spritzgießstation 4 hergestellten Grundkörper-Spritz-linge werden durch den Zugmitteltrieb 2 bzw. die an diesem angekoppelten Halter 3 in die zweite Spritzgießstation 5 transportiert. Der Zugmitteltrieb 2 ist in dem gezeigten Ausführungsbeispiel als Kettentrieb ausgebildet, kann jedoch auch als Riemen- oder Kabeltrieb ausgeführt werden. Wie Fig.1 entnommen werden kann, erstreckt sich der Zugmitteltrieb durch die ersten und zweiten Spritzgießstation 4,5 hindurch und über das Spritzgießwerkzeug 6 hinaus. Zwischen der ersten und zweiten Spritzgießstation erfolgt eine Umlenkung des Zugmitteltriebes. Aus dem Spritzgießwerkzeug 6 bzw. der ersten Spritzgießstation 4 hinausgeführte Halter 3 werden so in das Spritzgießwerkzeug 6 zurückgeführt, d.h. in die zweite Spritzgießstation 5. Die Länge des über das Spritzgießwerkzeug 6 hinausragenden Abschnittes 2c des Zugmitteltriebes 2 ist dabei je nach Bedarf einstellbar, ohne daß hierzu irgendwelche Veränderungen an dem Spritzgießwerkzeug 6 vorgenommen werden müßten.

Zur Aufnahme der Spritzlinge im teilfertigen wie im fertigen Zustand sind Halter 3 vorgesehen, die an den Zugmitteltrieb 2 ankoppelbar sind. Diese Halter dienen weiterhin dazu, Einlegeteile wie beispielsweise Metalleinsätze, Borsten oder Dekorfolien der ersten Spritzgießstation 4 zuzuführen, um diese dort mit Kunststoff zu umspritzen.

Die Bestückung der Halter 3 erfolgt in der der ersten Spritzgießstation 4 vorgelagerten Eingabestation 8. Alternativ zu der Bestückung der Halter 3 in der Eingabestation 8 können dort auch bereits bestückte Halter an den Zugmitteltrieb 2 angekoppelt werden.

Die Entnahme der fertigen Spritzlinge erfolgt in der der letzten Spritzgießstation 5 nachfolgenden Entnahmestation 7, wo entweder die fertigen Spritzlinge S von den Haltern 3 entfernt oder aber die Halter 3 mitsamt der Spritzlinge S von dem Zugmitteltrieb 2 abgekoppelt werden.

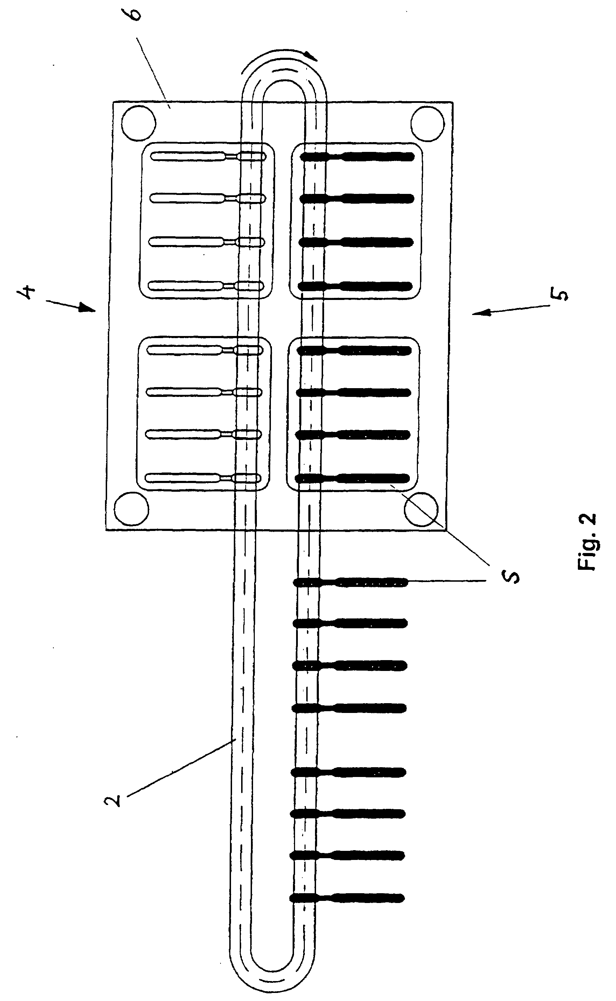

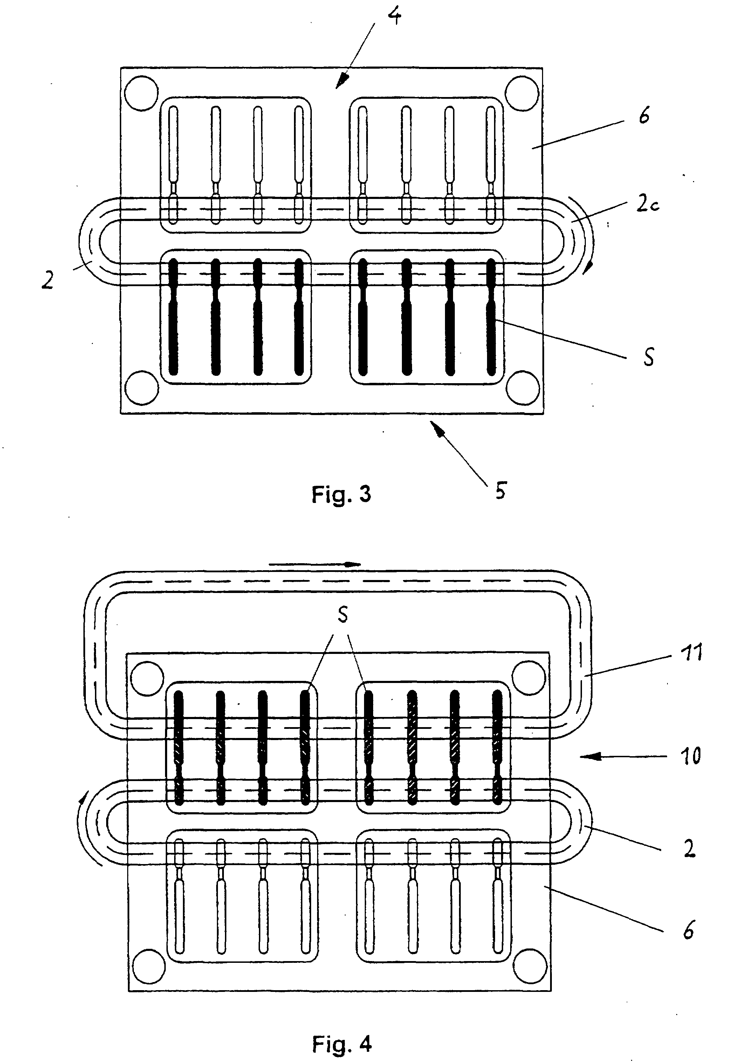

Wie den weiteren Ausführungsbeispielen in Figuren 2 bis 5 zu entnehmen sind, kann der Zugmitteltrieb 2 als umlaufender Entlosförderer ausgebildet werden, der taktweise in einer Richtung angetrieben wird. Hierzu können beispielsweise Servomotoren als Antrieb verwendet werden. Wie insbesondere in den Figuren 2 und 3 gezeigt, ist die Länge des Zugmitteltriebes 2 beliebig einstellbar.

In den Abschnitt 2c des Zugmitteltriebes zwischen der ersten und zweiten Spritzgießstation 4, 5 können, ebenso wie vor oder hinter den beiden Spritzgießstationen 4, 5, zusätzliche Arbeitsstationen 9a, 9b, 9c eingeschaltet werden, um beispielsweise weitere Einlegteile an den Haltern 3 bzw. den Grundkörper-Spritzlingen anzubringen, oder um diese abzukühlen. Eine hierzu ggf. notwendige Verlängerung des Zugmittelabschnittes 2c ist unschwer möglich. Gleichfalls können weitere Spritzgießstationen in den Abschnitt 2c eingeschleift werden.

Im folgenden soll nun die Arbeitsweise der Spritzgießvorrichtungen nach dem ersten Ausführungsbeispiel beschrieben werden. Die Halter 3 an dem Zugmitteltrieb 2 werden während eines ersten Arbeitstaktes mit Einlegeteilen bestückt und anschließend nach Betätigung des Zugmitteltriebes 2 in das Spritzgießwerkzeug 6 zu dessen ersten Formhohlräumen 4a transportiert. Im nächsten Arbeitstakt werden die Einlegeteile dann mit Kunststoff umspritzt, um sogenannte Grundkörper-Spritzlinge herzustellen. Diese werden anschließend nach erneuter Betätigung des Zugmitteltriebs aus dem Spritzgießwerkzeug 6 hinausgefördert und gelangen nach einer vorgebbaren Anzahl von Arbeitstakten zu den Formhohlräumen 5a der zweiten Spritzgießstation 5, wo während eines weiteren Arbeitstaktes erneut Spritzgießmaterial an den Grundkörper-Spritzling angespritzt wird. Die Anordnung der Halter 3 an dem Zugmitteltrieb 2 erfolgt dabei so, daß bei einem Schließen des Spritzgießwerkzeuges 6 gleichzeitig ein Spritzen in die ersten Formhohlräume 4a sowie in die zweiten Formhohlräume 5a erfolgen kann. Nach dem Öffnen des Spritzgußwerkzeuges 6 und einer erneuten Betätigung des Zugmitteltriebes 2 werden die nun fertigen Spritzlinge in der Entnahmestation 7 den Haltern 3 entnommen. Ein Halter kann auch mehrere Spritzlinge halten. Vorzugsweise sind die Halter so ausgebildet, daß diese so viele Spritzlinge aufnehmen wie Formhohlräume 4a in einer Formhohlraumgruppe vorhanden sind.

Während des Betriebes der Spritzgießvorrichtung wird das Spritzgießwerkzeug 6 stets nur soweit geöffnet, wie dies zum Hinausfördem der Spritzlinge S nötig ist. Da bei dem gezeigten Ausführungsbeispiel die Spritzlinge S mit ihrer Haupterstreckungsrichtung in der Ebene des Zugmitteltriebes angeordnet sind, brauchen die Formplatten des Spritzgießwerkzeuges 6 nur geringfügig auseinandergefahren zu werden, um einen störungsfreien Abtransport der Spritzlinge zu ermöglichen. Der geringe Öffnungsweg des Spritzgießwerkzeuges 6 ermöglicht ein schnelles Öffnen und Schließen, so daß hierdurch die Zykluszeit der Arbeitstakte und damit die Stillstandszeit des Zugmitteltriebes gering gehalten werden kann.

Zur Abförderung halbfertiger oder fertiger Spritzlinge kann eine Übergabevorrichtung vorgesehen werden, die diese von dem Zugmitteltrieb 2 an ein zusätzliches Fördermittel, das in gleicher Weise wie der erste Zugmitteltrieb 2 ausgebildet sein kann, übergibt. Die Übergabe halbfertiger oder fertiger Spritzlinge kann dabei, wie insbesondere in den Figuren 1 und 2 gezeigt, außerhalb der Spritzgießwerkzeuge erfolgen. Alternativ hierzu kann die Übergabevorrichtung 10 jedoch auch so angeordnet werden, daß die Spritzlinge innerhalb des Spritzgießwerkzeuges umgesetzt, d.h. von dem Zugmitteltrieb zu den weiteren Fördermittel 11 übertragbar sind. Dieses ist insbesondere dann vorteilhaft, wenn für die gesamte Spritzgießvorrichtung nur eine sehr beschränkte Aufstellfläche zur Verfügung steht.

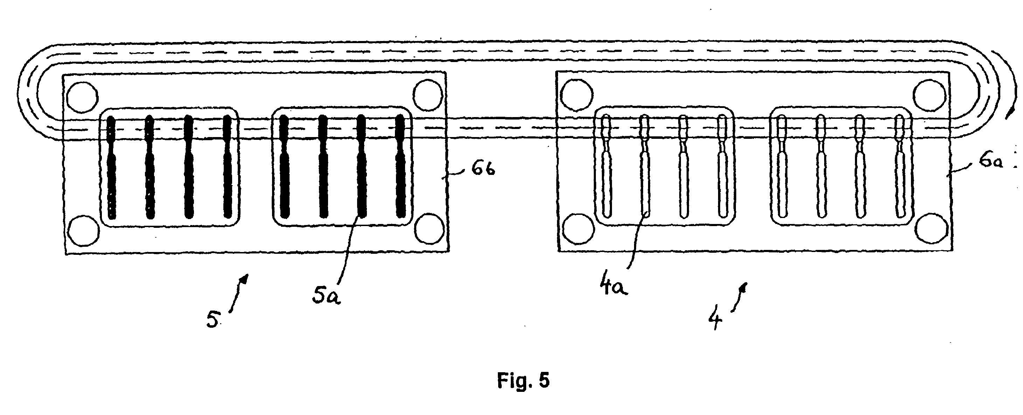

Bei dem in Figur 5 gezeigten fünften Ausführungsbeispiel sind die beiden Spritzgießstationen 4 und 5 bzw. die entsprechenden Formhohlräume 4a, 5a in separaten, voneinander räumlich getrennten Spritzgießwerkzeugen 6a, 6b vorgesehen, die vorteilhafterweise eng hintereinander angeordnet werden. Die Anordnungen der einzelnen Spritzgießwerkzeuge 6a, 6b hintereinander ist nicht auf die in Fig. 5 gezeigte, gerade Ausrichtung beschränkt, sondern kann durch eine entsprechende Umlenkung des Zugmitteltriebabschnittes zwischen beiden an beliebige räumliche Begebenheiten angepaßt werden. Genauso wie in Fig. 1 können auch in Fig. 5 weitere Bearbeitungsstationen an beliebiger Stelle auf den Zugmitteltrieb aufgeschaltet werden. Auch kann dort eine Übergabevorrichtung entsprechend Fig. 4 eingesetzt werden. Grundsätzlich können in Fig. 5 auch zwei Einkomponenten-Spritzgießvorrichtungen verwendet werden, die durch den Zugmitteltrieb 2 verbunden sind.

Die Erfindung ist nicht auf die vorerläuterten Ausführungsbeispiele beschränkt. Sie kann vielmehr auch für das Einkomponenten-Spritzgießen verwendet werden (eine Spritzgießstation). Der Zugmitteltrieb dient dabei z.B. der Einführung von an Haltern gelagerten Borstensätzen in das Spritzgießwerkzeug und der Abförderung der fertigen Bürsten aus dem Spritzgießwerkzeug zu einer Entnahme-/Übergabestation (diese kann innerhalb oder außerhalb des Werkzeugs angeordnet sein).

## Patentansprüche

1. Mehrkomponenten-Spritzgießvorrichtung, insbesondere zur Herstellung von Zahnbürsten, mit mindestens zwei abfolgenden Stationen, von denen eine eine Spritzgießstation (4) ist, und einer Transportvorrichtung zwischen den Stationen, die einen die Stationen verbindenden Zugmitteltrieb (2, 2c, 11) aufweist, wobei der Zugmitteltrieb (2, 2c, 11) durch zumindest ein Spritzgießwerkzeug (6) mit der einen Spritzgießstation (4) geführt ist, **dadurch gekennzeichnet, daß** der Zugmitteltrieb (2, 2c, 11) diese Spritzgießstation (4) mit Stationen außerhalb des Spritzgießwerkzeuges (6) verbindet und durch diesen oder einen weiteren Zugmitteltrieb die erste Spritzgießstation (4) mit zumindest einer weiteren Spritzgießstation (5) für das Anspritzen einer weiteren Komponente verbunden ist.

2. Mehrkomponenten-Spritzgießvorrichtung nach Anspruch 1, **dadurch gekennzeichnet, daß** die Stationen zumindest zwei abfolgende Spritzgießstationen (4,5)aufweisen.

3. Mehrkomponenten-Spritzgießvorrichtung nach Anspruch 1 oder 2, **dadurch gekennzeichnet, daß** an einer ersten Spritzgießstation (4) zum Spritzen von Grundkörpern und an einer nachfolgenden, zweiten Spritzgießstation (5) zum Anspritzen weiteren Spritzgußmaterials an den Grundkörper jeweils mindestens ein Formhohlraum (4a,5a) vorgesehen ist.

4. Mehrkomponenten-Spritzgießvorrichtung nach Anspruch 3, **dadurch gekennzeich** net, daß die beiden Spritzgießstationen (4, 5) unmittelbar nebeneinander angeordnet sind.

5. Mehrkomponenten-Spritzgießvorrichtung nach zumindest einem der Ansprüche 1 oder 2, **dadurch gekennzeichnet, daß** die beiden Spritzgießstationen (4, 5) in einem gemeinsamen Spritzgießwerkzeug (6) angeordnet sind.

6. Mehrkomponenten-Spritzgießvorrichtung nach Anspruch 5, **dadurch gekennzeichnet, daß** der Zugmitteltrieb (2) zwischen der ersten und zweiten Spritzgießstation (4, 5) vorzugsweise außerhalb des gemeinsamen Spritzgießwerkzeuges (6) umgelenkt wird.

7. Mehrkomponenten-Spritzgießvorrichtung nach zumindest einem der vorhergehenden Ansprüche 2 bis 6, **dadurch gekennzeichnet, daß** Abschnitte (2a, 2b) des Zugmitteltriebes (2) innerhalb der ersten und zweiten Spritzgießstationen (4,5) im wesentlichen parallel zueinander verlaufen.

8. Mehrkomponenten-Spritzgießvorrichtung nach zumindest einem der vorhergehenden Ansprüche 5 bis 7, **dadurch gekennzeichnet, daß** für jeden Formhohlraum (4a,5a) des gemeinsamen Spritzwerkzeuges (6) eine eigene Spritzmaterialzuführvorrichtung vorgesehen ist.

9. Mehrkomponenten-Spritzgießvorrichtung nach einem der vorhergehenden Ansprüche 1 bis 8, **dadurch gekennzeichnet, daß** für jede der beiden Spritzgießstationen (4,5) ein separates Spritzgießwerkzeug (6a,6b) vorgesehen ist.

10. Mehrkomponenten-Spritzgießvorrichtung nach zumindest einem der vorhergehenden Ansprüche 1 bis 9, **dadurch gekennzeichnet, daß** einer Spritzgießstation (5) stromabseitig eine Entnahmestation (7) zur Entnahme der fertigen Spritzlinge (S) von dem Zugmitteltrieb (2) nachgeschaltet ist, über die der Zugmitteltrieb (2) mit der Spritzgießstation (4, 5) verbunden ist.

11. Mehrkomponenten-Spritzgießvorrichtung nach zumindest einem der vorhergehenden Ansprüche 1 bis 10, **dadurch gekennzeichnet, daß** der Zugmitteltrieb (2) mit Haltern (3), insbesondere für Spritzlinge (5), versehen ist.

12. Mehrkomponenten-Spritzgießvorrichtung nach Anspruch 10, **dadurch gekennzeichnet, daß** der Zugmitteltrieb (2) mit Haltern (3) unterschiedlicher Art für unterschiedliche Gegenstände versehen ist, die austauschbar an dem Zugmitteltrieb (3) lagerbar sind.

13. Mehrkomponenten-Spritzgießvorrichtung nach zumindest einem der Ansprüche 10 oder 11, **dadurch gekennzeichnet, daß** die Halter (3) für die Spritzlinge (S) von dem Zugmitteltrieb (2) abkoppelbar sind.

14. Mehrkomponenten-Spritzgießvorrichtung nach zumindest einem der vorhergehenden Ansprüche 1 bis 13, **dadurch gekennzeichnet, daß** einer ersten Spritzgießstation (4) stromaufseitig eine Eingabestation (8) vorgeschaltet ist, die über den Zugmitteltrieb (2) mit der Spritzgießstation (4,5) verbunden ist und in der zu umspritzende Elemente, beispielsweise Borsten, über die Halter (3) an den Zugmitteltrieb (2) ankoppelbar und der Spritzgießstation (4,5) zuführbar sind.

15. Mehrkomponenten-Spritzgießvorrichtung nach zumindest einem der vorhergehenden Ansprüche 1 bis 14, **dadurch gekennzeichnet, daß** der Zugmitteltrieb (2) als endlos umlaufendes Fördermittel ausgebildet ist.

16. Mehrkomponenten-Spritzgießvorrichtung nach zumindest einem der vorhergehenden Ansprüche 1 bis 15, **dadurch gekennzeichnet, daß** eine Übergabevorrichtung (10) vorgesehen ist, zur Übertragung halbfertig oder fertig gespritzter Spritzlinge von dem Zugmitteltrieb (2) an ein zusätzliches Fördermittel (11), vorzugsweise einen weiteren Zugmitteltrieb.

17. Mehrkomponenten-Spritzgießvorrichtung nach Anspruch 16, **dadurch gekennzeichnet, daß** die Spritzlinge innerhalb des Spritzgießwerkzeuges (6;6a,6b) von dem Zugmitteltrieb (2) zu dem weiteren Fördermittel übertragbar sind.

## Claims

1. Multicomponent injection-moulding apparatus, in particular for the manufacture of toothbrushes, with at least two successive stations one of which is an injection-moulding station (4) and a transport apparatus between the stations which has a traction mechanism (2, 2c, 11) connecting the stations, the traction mechanism (2, 2c, 11) being led through at least one injection-moulding die (6) with the one injection-moulding station (4), **characterized in that** the traction mechanism (2, 2c, 11) connects this injection-moulding station (4) with stations outside the injection-moulding die (6) and the first injection-moulding station (4) is connected by this or another traction mechanism with at least one other injection-moulding station (5) for moulding-on of a further component.

2. Multicomponent injection-moulding apparatus according to Claim 1, **characterized in that** the stations comprise at least two successive injection-moulding stations (4, 5).

3. Multicomponent injection-moulding apparatus according to Claim 1 or Claim 2, **characterized in that** a first injection-moulding station (4) for injection-moulding main bodies and an ensuing second injection-moulding station (5) for moulding-on of further injection-moulding material on to the main body are each provided with at least one die cavity (4a, 5a).

4. Multicomponent injection-moulding apparatus according to Claim 3, **characterized in that** the two injection-moulding stations (4, 5) are arranged immediately adjacent to each other.

5. Multicomponent injection-moulding apparatus according to at least one of Claims 1 and 2, **characterized in that** the two injection-moulding stations (4, 5) are arranged in a common injection-moulding die (6).

6. Multicomponent injection-moulding apparatus according to Claim 5, **characterized in that** the traction mechanism (2) between the first and second injection-moulding stations (4, 5) is preferably looped back outside the common injection-moulding die (6).

7. Multicomponent injection-moulding apparatus according to at least one of the preceding Claims 2 to 6, **characterized in that** sections (2a, 2b) of the traction mechanism (2) within the first and second injection-moulding stations (4, 5) run essentially parallel with each other.

8. Multicomponent injection-moulding apparatus according to at least one of the preceding Claims 5 to 7, **characterized in that** a separate feed apparatus for moulding material is provided for each die cavity (4a, 5a) of the common injection-moulding die (6).

9. Multicomponent injection-moulding apparatus according to any one of the preceding Claims 1 to 8, **characterized in that** a separate injection-moulding die (6a, 6b) is provided for each of the two injection-moulding stations (4, 5).

10. Multicomponent injection-moulding apparatus according to at least one of the preceding Claims 1 to 9, **characterized in that** a removal station (7) for removal of the finished mouldings (S) from the traction mechanism (2) [and which is] connected with the injection-moulding station[s] (4, 5) [by] the traction mechanism (2) is located downstream of one injection-moulding station (5).

11. Multicomponent injection-moulding apparatus according to at least one of the preceding Claims 1 to 10, **characterized in that** the traction mechanism (2) is provided with holders (3), in particular for mouldings [S].

12. Multicomponent injection-moulding apparatus according to Claim 10, **characterized in that** the traction mechanism (2) is provided with holders (3) of various types for different articles, these holders being exchangeably mountable on the traction mechanism [2].

13. Multicomponent injection-moulding apparatus according to at least one of Claims 10 and 11, **characterized in that** the holders (3) for the mouldings (S) can be uncoupled from the traction mechanism (2).

14. Multicomponent injection-moulding apparatus according to at least one of the preceding Claims 1 to 13, **characterized in that** an insertion station (8), which is connected with the injection-moulding station[s] (4, 5) by the traction mechanism (2) and in which elements, for example bristles, to be moulded *in situ* can be coupled by the holders (3) to the traction mechanism (2) and fed to the injection-moulding station[s] (4, 5), is located upstream of a first injection-moulding station (4).

15. Multicomponent injection-moulding apparatus according to at least one of the preceding Claims 1 to 14, **characterized in that** the traction mechanism (2) is configured as an endless conveyor.

16. Multicomponent injection-moulding apparatus according to at least one of the preceding Claims 1 to 15, **characterized in that** a transfer apparatus (10) is provided for transferring partly or fully moulded injection-mouldings from the traction mechanism (2) to an additional conveyor (11), preferably another traction mechanism.

17. Multicomponent injection-moulding apparatus according to Claim 16, **characterized in that** the injection-mouldings are transferable from the traction mechanism (2) to the other conveyor within the injection-moulding die (6; 6a, 6b).

## Revendications

1. Dispositif de moulage par injection à plusieurs composants, en particulier pour fabriquer des brosses à dents, comportant au moins deux postes successifs dont un est un poste de moulage par injection (4), et un dispositif de transport entre les postes qui présente un entraînement à traction (2, 2c, 11) reliant les postes, lequel entraînement (2, 2c, 11) traverse au moins un outil de moulage par injection (6) contenant le premier poste de moulage par injection (4), **caractérisé en ce que** l'entraînement à traction (2, 2c, 11) relie ce poste d'injection (4) à des postes situés à l'extérieur de l'outil d'injection (6), et grâce à cet entraînement ou à un autre entraînement à traction, le premier poste d'injection (4) est relié à au moins un autre poste de moulage par injection (5) pour l'injection d'un autre composant.

2. Dispositif de moulage par injection à plusieurs composants selon la revendication 1, **caractérisé en ce que** les postes comportent au moins deux postes de moulage par injection (4, 5) qui se suivent.

3. Dispositif de moulage par injection à plusieurs composants selon la revendication 1 ou 2, **caractérisé en ce qu'**au moins une empreinte de moulage (4a, 5a) est prévue dans un premier poste d'injection (4) destiné à mouler par injection des corps de base, et sur un second poste d'injection suivant (5) destiné à injecter une matière supplémentaire sur le corps de base.

4. Dispositif de moulage par injection à plusieurs composants selon la revendication 3, **caractérisé en ce que** les deux postes de moulage par injection (4, 5) sont disposés directement l'un à côté de l'autre.

5. Dispositif de moulage par injection à plusieurs composants selon l'une au moins des revendications 1 ou 2, **caractérisé en ce que** les deux postes de moulage par injection (4, 5) sont disposés dans un outil de moulage par injection commun (6).

6. Dispositif de moulage par injection à plusieurs composants selon la revendication 5, **caractérisé en ce que** l'entraînement à traction (2) est dévié entre les premier et second postes d'injection (4, 5), de préférence à l'extérieur de l'outil d'injection commun (6).

7. Dispositif de moulage par injection à plusieurs composants selon l'une au moins des revendications précédentes 2 à 6, **caractérisé en ce que** des sections (2a, 2b) de l'entraînement à traction (2) situées à l'intérieur des premier et second postes d'injection (4, 5) sont sensiblement parallèles.

8. Dispositif de moulage par injection à plusieurs composants selon l'une au moins des revendications précédentes 5 à 7, **caractérisé en ce qu'**un dispositif d'amenée de matière d'injection individuel est prévu pour chaque empreinte de moulage (4a, 5a) de l'outil d'injection commun (6).

9. Dispositif de moulage par injection à plusieurs composants selon l'une des revendications précédentes 1 à 8, **caractérisé en ce qu'**un outil d'injection distinct (6a, 6b) est prévu pour chacun des deux postes d'injection (4, 5).

10. Dispositif de moulage par injection à plusieurs composants selon l'une des revendications précédentes 1 à 9, **caractérisé en ce qu'**il est prévu, en aval du poste d'injection (5), un poste de sortie (7) qui est destiné à enlever les pièces injectées finies (S) de l'entraînement à traction (2) et qui est relié au poste d'injection (4, 5) par l'intermédiaire de l'entraînement à traction (2).

11. Dispositif de moulage par injection à plusieurs composants selon l'une au moins des revendications précédentes 1 à 10, **caractérisé en ce que** l'entraînement à traction (2) est pourvu de fixations (3), en particulier pour les pièces injectées (S).

12. Dispositif de moulage par injection à plusieurs composants selon la revendication 10, **caractérisé en ce que** l'entraînement à traction (2) est pourvu de fixations (3) de différents types pour des objets différents qui peuvent être supportés de manière échangeable sur l'entraînement à traction (2).

13. Dispositif de moulage par injection à plusieurs composants selon l'une au moins des revendications 10 ou 11, **caractérisé en ce que** les fixations (3) pour les pièces injectées (S) sont aptes à être désolidarisées de l'entraînement à traction (2).

14. Dispositif de moulage par injection à plusieurs composants selon l'une au moins des revendications précédentes 1 à 13, **caractérisé en ce qu'**il est prévu, en amont d'un premier poste d'injection (4), un poste d'entrée (8) qui est relié au poste d'injection (4, 5) par l'intermédiaire de l'entraînement à traction (2) et dans lequel des éléments à enrober par injection, comme par exemple des poils, peuvent être accouplés à l'entraînement à traction (2) par l'intermédiaire des fixations (3) et être amenés dans le poste d'injection (4, 5).

15. Dispositif de moulage par injection à plusieurs composants selon l'une au moins des revendications précédentes 1 à 14, **caractérisé en ce que** l'entraînement à traction (2) est conçu comme un moyen de transport sans fin.

16. Dispositif de moulage par injection à plusieurs composants selon l'une au moins des revendications précédentes 1 à 15, **caractérisé en ce qu'**il est prévu un dispositif de transfert (10) pour transférer les pièces injectées semi-finies ou finies, à partir de l'entraînement à traction (2), sur un moyen de transport supplémentaire (11), de préférence un autre entraînement à traction.

17. Dispositif de moulage par injection à plusieurs composants selon la revendication 16, **caractérisé en ce que** les pièces injectées sont aptes à être transférées sur l'autre moyen de transport, à partir de l'entraînement à traction (2), à l'intérieur de l'outil d'injection (6 ; 6a, 6b).
